# EUROPEAN PATENT SPECIFICATION

(11) **EP 4 357 910 B1**
(45) Date of publication and mention of the grant of the patent: **04.06.2025**
(21) Application number: 23204431.3
(22) Date of filing: 18.10.2023
(51) Int. Cl.: G06F 8/65, G06F 9/50, G06F 12/14

(54) **EFFICIENT MEMORY PARTITION MANAGEMENT WITH APPARENT REDUNDANCY**
EFFIZIENTE SPEICHERPARTITIONSVERWALTUNG MIT SCHEINBARER REDUNDANZ
GESTION EFFICACE DE PARTITION DE MÉMOIRE AVEC REDONDANCE APPARENTE

(30) Priority: 19.10.2022 IN 202241059712; 12.10.2023 US 202318485776
(43) Date of publication of application: 24.04.2024
(73) Proprietor: Harman International Industries, Incorporated, Stamford, CT 06901 (US)
(72) Inventor: THOMAS VARGHESE, Eugine, Stamford, 06901 (US); ANNEGOWDA, Amruth, Stamford, 06901 (US); TAMILSELVAN, Saravanakumar, Stamford, 06901 (US)
(74) Representative: Rummler, Felix

(56) References cited:
- US-A1- 2012 054 734

## Description

### BACKGROUND

### Field of the Various Embodiments

The various embodiments relate generally to computing systems, and more specifically, to efficient memory partition management with apparent redundancy.

### Description of the Related Art

Many modem vehicles rely on one or more sophisticated embedded electronics systems for various operational and safety functions, including engine performance, information, and entertainment (also referred to as infotainment), autonomous or semiautonomous driving, collision avoidance, route navigation, and/or the like. To provide the various operation and safety functions, these systems execute can software applications that are organized into multiple partitions. Each partition includes instructions executed by the software applications and/or data accessed by the software applications during execution. In certain use cases, these partitions are duplicated such that two independent sets of partitions reside in memory concurrently. Document US2012054734 discloses software upgrade using a dynamically sized partition.

In one use case, having two independent sets of partitions provides improved system reliability. For example, a software application can execute in a first set of partitions when a memory error occurs in one or more partitions in the first set of partitions. The memory error could result in corruption of the instructions executed by the software application and/or the data accessed by the software application. When such a memory error occurs, the system can switch from executing the software application in the first set of partitions to executing the software application in a second set of partitions, thereby avoiding the one or more partitions that experienced the memory error.

In a second use case, a current version of the software application can execute in a first set of partitions while an update process is storing an updated version of the software application in a second set of partitions. This technique allows the system to continue to operate during the software update process. If the update process completes successfully, then the system can switch from executing the current version of the software application in the first set of partitions to executing the updated version of the software application in the second set of partitions. If the update process does not complete successfully, then the system continues to execute the current version of the software application in the first set of partitions.

A drawback with this approach for maintaining multiple sets of partitions is that the memory requirements under such an approach can be double or more relative to a system that maintains a single set of partitions. Further, an embedded system employed in a vehicle and/or other environment can have restrictions on power consumption, size, and weight such that double the amount of memory may not be feasible. In addition, the memory requirement for a software application can increase with each updated version, as features are added to the software application over time. Although the memory requirements of the original version of the software application could allow the system to maintain multiple sets of partitions of the original size, the memory requirements of subsequent updated versions may be too large to accommodate multiple sets of partitions to be stored concurrently.

As the foregoing illustrates, what is needed are more effective ways to manage memory storage for software applications in an embedded system.

### SUMMARY

One embodiment sets forth a computer-implemented method for managing memory partitions in a computing system comprising generating a first entry for a first partition table associated with a first instance of a software application, wherein the first entry is associated with a first memory partition that includes a first memory extent; determining that a first data block referenced by the first memory partition is shared with a second instance of the software application; and generating a second entry for a second partition table associated with a second instance of the software application, wherein the second entry is associated with the first memory partition that includes the first memory extent.

One embodiment sets forth a system comprising a memory including instructions; and one or more processors coupled to the memory. When executing the instructions, the one or more processors generate a first entry for a first partition table associated with a first instance of a software application, wherein the first entry is associated with a first memory partition that includes a first memory extent; determine that a first data block referenced by the first memory partition is shared with a second instance of the software application; and generate a second entry for a second partition table associated with a second instance of the software application, wherein the second entry is associated with the first memory partition that includes the first memory extent.

Further embodiments provide, among other things, one or more non-transitory computer-readable media and systems configured to implement the method set forth above.

At least one technical advantage of the disclosed approaches relative to the prior art is that, with the disclosed techniques, an embedded system can maintain a single set of relevant data areas shared between different versions of a software application in one or more partitions, thereby reducing the memory requirements relative to a system that maintains multiple sets of partitions. Further, the embedded system maintains multiple partition tables that map to the single set of partitions. As a result, the software application accesses the partitions via a particular partition table, without being aware of which partitions are duplicated and which partitions are not duplicated, thereby simplifying the software application design. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 is a block diagram of a computing system configured to implement one or more aspects of the various embodiments;
FIG. 2 illustrates a first slot for accessing partitions associated with a software application executed by the computing device of FIG. 1, according to various embodiments;
FIG. 3 illustrates generating a first slot and a second slot for the software application using non-redundant partitions, according to various embodiments;
FIG. 4 illustrates modifying the second slot for updating the software application using a combination of redundant and non-redundant partitions, according to various embodiments;
FIG. 5 illustrates copying the second slot to the first slot after completion of updating the software application, according to various embodiments; and
FIGs. 6A-6B set forth a flow diagram of method steps for managing memory partitions in the computing system of FIG. 1, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

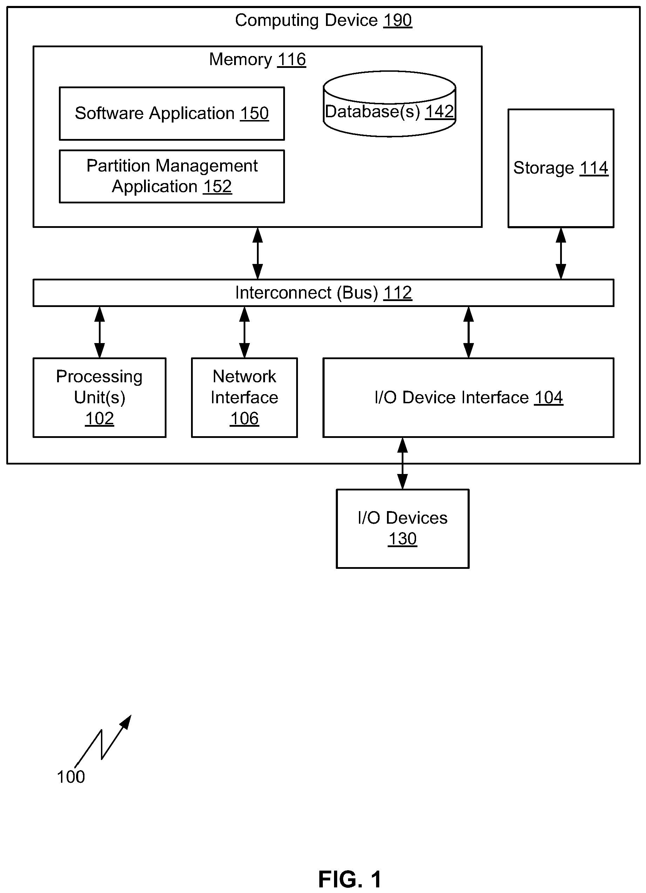

FIG. 1 is a block diagram of a computing system 100 configured to implement one or more aspects of the various embodiments. As shown, computing system 100 includes, without limitation, computing device 190 and input/output (I/O) device(s) 130. Computing device 190 includes, without limitation, one or more processing units 102, I/O device interface 104, network interface 106, interconnect (bus) 112, storage 114, and memory 116. Memory 116 stores database(s) 142, software application 150, and partition management application 152. Processing unit(s) 102, I/O device interface 104, network interface 106, storage 114, and memory 116 can be communicatively coupled to each other via interconnect 112.

Computing device 190 can include processing unit(s) 102 and memory 116. Computing device 190 can be a system-on-a-chip (SoC). In various embodiments, computing device 190 can be a head unit included in a vehicle system. In some embodiments, computing device 190, or computing system 100 overall, can be an aftermarket system or device added to a vehicle. Generally, computing device 190 can be configured to coordinate the overall operation of computing system 100. The embodiments disclosed herein contemplate any technically feasible system configured to implement the functionality of computing system 100 via computing device 190. Various examples of computing device 190 include wearable devices (e.g., helmet, headset, glasses, etc.), vehicle computing devices (e.g., head units, in-vehicle infotainment systems, driver assistance systems, aftermarket systems), and/or the like. In some embodiments, computing system 100 is located in various environments including, without limitation, road vehicle environments (e.g., consumer vehicle, commercial truck, etc.), aerospace and/or aeronautical environments (e.g., airplanes, helicopters, spaceships, etc.), nautical and submarine environments, and/or the like. In some embodiments, computing system 100 is part of the implementation of an in-vehicle infotainment (IVI) system, a head unit, an engine control unit (ECU), and/or the like.

Processing unit(s) 102 can include any technically feasible form of processing device configured to process data and execute program code. In some examples, processing unit(s) 102 can include a central processing unit (CPU), a digital signal processing unit (DSP), a microprocessor, an application-specific integrated circuit (ASIC), a neural processing unit (NPU), a graphics processing unit (GPU), a field-programmable gate array (FPGA), and/or the like. Each processing unit 102 generally comprises a programmable processor that executes program instructions to manipulate input data. In some embodiments, processing unit(s) 102 can include any number of processing cores, memories, and/or other modules for facilitating program execution. In operation, processing unit(s) 102 can be a primary processor of computing device 190, controlling and coordinating operations of other system components.

Storage 114 can include non-volatile storage for applications, software modules, and data, and can include fixed or removable disk drives, flash memory devices, and CD-ROM, DVD-ROM, Blu-Ray, HD-DVD, or other magnetic, optical, solid state storage devices, and/or the like. For example, software application 150, and partition management application 152, and database(s) 142 could be stored in storage 114, and then loaded into memory 116 as needed.

Memory 116 can include a memory module or collection of memory modules. Memory 116 generally comprises storage chips such as random-access memory (RAM) chips that store application programs and data for processing by processing unit 102. Processing unit(s) 102, I/O device interface 104, and network interface 106 can be configured to read data from and write data to memory 116. Software application 150 and partition management application 152 can be loaded from storage 114 into memory 116. While in memory 116, software application 150 and partition management application 152 can be executed by processing unit(s) 102 to implement the functionality described according to the various embodiments in the present disclosure.

I/O device(s) 130 can include devices capable of receiving input (not shown) (e.g., a keyboard, a mouse, a touch-sensitive screen, pushbuttons, rotary knobs, a microphone, etc.) for providing input data to computing device 190. I/O device(s) 130 can include devices capable of providing output (e.g., a display screen, one or more speakers, haptic devices, touchless haptic devices, and/or the like. One or more of I/O devices 130 can be incorporated in computing device 190 or can be external to computing device 190. I/O devices 130 can interface with computing device 190 via I/O devices interface 104. In some embodiments, computing device 190 and/or one or more I/O device(s) 130 can be components of a head unit implemented in a vehicle. In some embodiments, software application 150 and partition management application 152 can obtain information from one or more systems and/or subsystems of the vehicle (e.g., navigation system, infotainment system, driver assistance system) and display that information via computing system 100. More generally, computing system 100 (e.g., computing device 190) can interface with other systems of the vehicle to acquire information for display.

A network (not shown) can enable communications between computing device 190 and other devices in network via wired and/or wireless communications protocols, satellite networks, telephone networks, V2X networks, including Bluetooth, Bluetooth low energy (BLE), wireless local area network (WiFi), cellular protocols, and/or near-field communications (NFC). The network can be any technically feasible type of communications network that allows data to be exchanged between computing device 190 and remote systems or devices, such as a server, a cloud computing system, cloud-based storage, or other networked computing device or system. For example, the network could include a wide area network (WAN), a local area network (LAN), a wireless network (e.g., a Wi-Fi network, a cellular data network), and/or the Internet, among others. Computing device 190 can connect with a network via network interface 106. In some embodiments, network interface 106 is hardware, software, or a combination of hardware and software, which is configured to connect to and interface with one or more networks.

In operation, partition management application 152 executing on computing device 190 emulates redundancy from non-critical partitions of software application 150 that use dynamic partitioning. Partition management application 152 emulates this redundancy by maintaining multiple partition tables with entries for a set of partitions, also referred to herein as memory partitions. The entries in the partition table reference the memory extents allocated to software application 150. Each partition table is stored in a memory region referred to as a slot. Software application 150 accesses the partitions via these partition tables without being aware of which partitions actually have redundant copies and which partitions do not. Instead, software application 150 accesses all partitions through one of the partition tables, thereby simplifying overall system design.

As an example, a dynamic partition in a Linux Kernel associated with software application 150 can maintain metadata structures in the form of partition tables that specify which memory regions, also referred to as extents, are reserved for which corresponding logical partitions. Partition management application 152 can maintain multiple partition tables for software application 150, even though only one partition table is active at a time. Corresponding logical partitions from different partition tables can reference the same extent or different extents, in any combination.

In some examples, partition management application 152 can maintain two partition tables for software application 150, where each partition table includes the same partitions, and corresponding partitions in the two partition tables reference the same extents in memory. Partition management application 152 can generate a first partition table in a first slot for a first version of software application 150. Partition management application 152 can update the partition name for each partition in the first partition table with a first version identifier, such as "1," "a," and/or the like. Partition management application 152 can store instructions and/or data for the different partitions in the blocks of memory referenced in the extents included in the partitions of the first partition table. Such blocks of memory are referred to herein as data blocks or, more simply, blocks. Partition management application 152 can copy the first partition table in the first slot to the second slot. Partition management application 152 can update the partition name for each partition in the second partition table with an updated version identifier, such as "2," "b," and/or the like.

During a software update of software application 150, partition management application 152 generates partitions for the updated version of software application 150 in a non-active partition table, such as the second partition table described above. Partition management application 152 updates the second partition table to include the partitions associated with the updated version of software application 150. Partition management application 152 can update the partition name for each updated partition and/or newly added partition in the second partition table with an updated version identifier, such as "2," "b," and/or the like. Partition management application 152 performs the software update process by storing instructions and/or data for the updated partitions and/or new partitions in the blocks of memory referenced in the extents included in the partitions of the second partition table.

During the software update process, computing device 190 continues to execute the current version of the software application via a first partition table (i.e., the currently active partition table) while the software update creates a second partition table (i.e., the software update partition table). The software update process completes successfully if computing device 190 can boot using data associated with the updated version of software application 150, as referenced by the second partition table. Partition management application 152 copies the metadata area in the second partition table into the first partition table. Partition management application 152 can update the partition name for each partition in the first partition table with the previous version identifier, such as "1," "a," and/or the like. The end result is that both the first partition table and the second partition table have logical partitions associated with the updated software version and sharing the same extents in memory 116. Therefore, each partition has only a single copy for corresponding extents in memory 116. The higher-level logic of software application 150 accesses the partition tables as if all partitions are redundant. However, because the partitions within each partition table share the same extents in memory 116, the total memory allocation is reduced relative to conventional techniques.

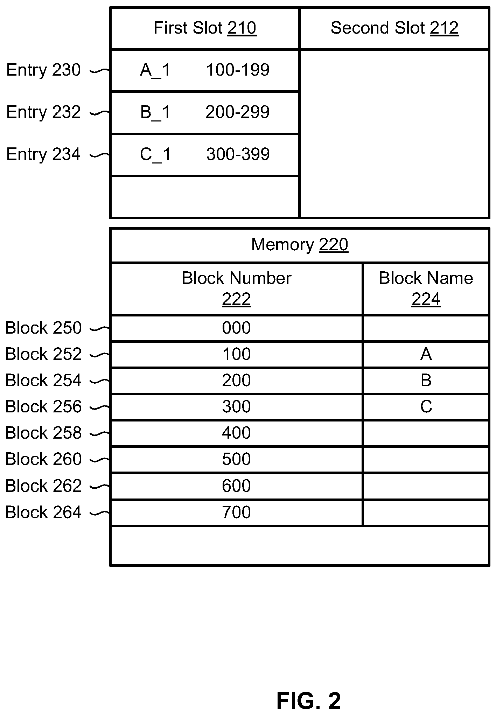

FIG. 2 illustrates a first slot 210 for accessing partitions associated with a software application 150 executed by the computing device 190 of FIG. 1, according to various embodiments. The second slot 212 is shown as unused. Each entry in a partition table includes a name for a partition and a list of memory regions, or extents, where the data for the partition is stored. The extents are stored as one or more blocks in memory 220. Memory 220 can be organized into fixed sized blocks, and each block can be referred to by a block number. In some examples, the block number is the starting address of the block. As shown, each extent specifies a multiple of 100 memory addresses, and each extent spans an integer number of blocks. Further, each block spans 100 memory addresses. Therefore, block number 100 includes an address range of 100-199, block number 200 includes an address range of 200-299, block number 300 includes an address range of 300-399, and so on. Memory 220 can be located in any memory system, such portions of memory 116, and/or the like. At the time that computing system 100 is manufactured and/or when the original version of software application 150 is provisioned, partition management application 152 generates the partition table in the first slot 210 and stores instructions and/or data for software application 150 in the corresponding blocks in memory 220.

As shown, partition management application 152 generates a partition table and stores the partition table in the first slot 210. The partition table includes three entries 230, 232, and 234 for three partitions included in software application 150. Entry 230 refers to instance 1 of partition A, denoted as A_1, entry 232 refers to instance 1 of partition B, denoted as B_1, and entry 234 refers to instance 1 of partition C, denoted as C_1. Entry 230 indicates that partition A_1 includes an extent with an address range of 100-199. Correspondingly, partition management application 152 stores instructions and/or data for this extent in block 252 with a block number 222 of 100 and with a block name 224 of A. Entry 232 indicates that partition B_1 includes an extent with an address range of 200-299. Correspondingly, partition management application 152 stores instructions and/or data for this extent in block 254 with a block number 222 of 200 and with a block name 224 of B. Entry 234 indicates that partition C_1 includes an extent with an address range of 300-399. Correspondingly, partition management application 152 stores instructions and/or data for this extent in block 256 with a block number 222 of 300 and with a block name 224 of C. Blocks 250, 258, 260, 262, and 264 are unused.

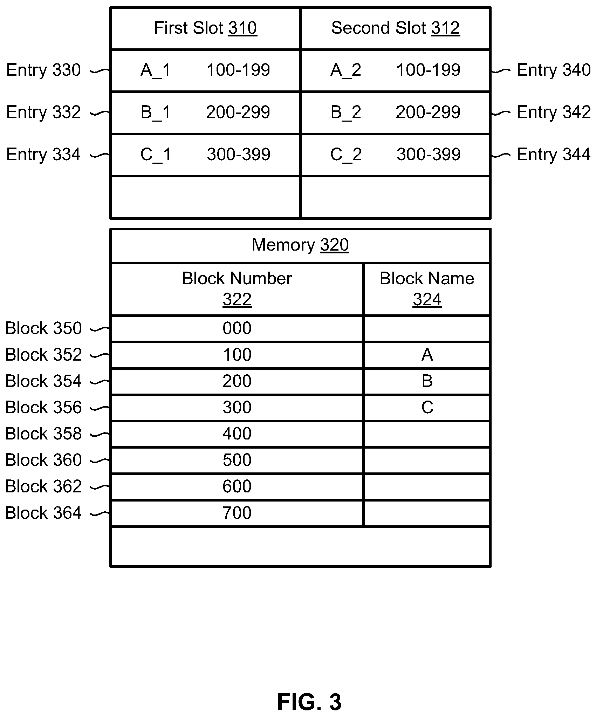

FIG. 3 illustrates generating a first slot 310 and a second slot 312 for the software application 150 using non-redundant partitions, according to various embodiments. As described herein, partition management application 152 generates and stores partition metadata for different instances of software application 150 in different respective partition tables stored in different slots. At the time that computing system 100 is manufactured and/or when the original version of software application 150 is provisioned, two instances of software application 150 can be installed in computing device 190. Computing device 190 can switch between the two instances of software application. Therefore, if one instance of software application 150 becomes corrupted and can no longer execute, computing device 190 can switch to the other instance and continue to execute software application 150. Software application 150 can include two types of partitions: critical partitions and non-critical partitions. Critical partitions are those partitions that are stored at multiple locations in memory. Critical partitions include instructions and/or data that are critical to the functioning of software application 150, data that cannot be rebuilt or recomputed by software application 150, and/or the like. Non-critical partitions are those partitions that are stored at one location in memory. Non-critical partitions include instructions and/or data that are not critical to the functioning of software application 150, data that can be rebuilt or recomputed by software application 150, and/or the like. The techniques described herein provides actual redundancy for critical partitions and apparent redundancy for non-critical partitions. Consequently, each entry in the partition table of the first slot 310 has a corresponding entry in in the partition table of the second slot 312. Each of these corresponding partition pairs shares the same extent mapping and share the same partition names. This technique allows a computing system to switch between the first slot 310 and the second slot 312, such as when memory corruption occurs in one or more critical partitions that are maintained through actual redundant partition sets. The multiple slots 310 and 312 provide access to non-critical partitions via multiple partition tables, where each partition table is accessed by a different instance of software application 150. By providing access to non-critical partition via different partition tables, software application 150 does not need to be aware of which partitions are actually redundant versus which partitions are apparently redundant.

As shown, partition management application 152 generates a partition table and stores the partition table in the first slot 310. The partition table includes three entries 330, 332, and 334 for three partitions included in software application 150. Entry 330 refers to instance 1 of partition A, denoted as A_1, entry 332 refers to instance 1 of partition B, denoted as B_1, and entry 334 refers to instance 1 of partition C, denoted as C_1. Entry 330 indicates that partition A_1 includes a first extent with an address range of 100-199. Correspondingly, partition management application 152 stores instructions and/or data in block 352 of memory 320 with a block number 322 of 100 and with a block name 324 of A. Entry 332 indicates that partition B_1 includes a first extent with an address range of 200-299. Correspondingly, partition management application 152 stores instructions and/or data in block 354 of memory 320 with a block number 422 of 200 and with a block name 324 of B. Entry 334 indicates that partition C_1 includes a first extent with an address range of 300-399. Correspondingly, partition management application 152 stores instructions and/or data in block 356 of memory 320 with a block number 322 of 300 and with a block name 324 of C.

Partition management application 152 also generates a partition table and stores the partition table in the second slot 312. The partition table includes three entries 340, 342, and 344 for the three partitions included in software application 150. The partitions of the second slot 312 reference the same partitions as the first slot 310. Entry 340 indicates that partition A_2 includes an extent with an address range of 100-199, where partition management application 152 stores instructions and/or data for this extent in block 352 of memory 320. Entry 342 indicates that partition B_2 includes an extent with an address range of 200-299, where partition management application 152 stores instructions and/or data for this extent in block 354 of memory 320. Entry 344 indicates that partition C_2 includes an extent with an address range of 300-399, where partition management application 152 stores instructions and/or data for this extent in block 356 of memory 320. Blocks 350, 358, 360, 362, and 364 are unused.

With this configuration, software application 150 is able to boot using data from either the first slot 310 or the second slot 312. This configuration provides apparent redundancy to software application 150, without requiring software application 150 to be aware of which partitions are actually redundant versus which partitions are apparently redundant.

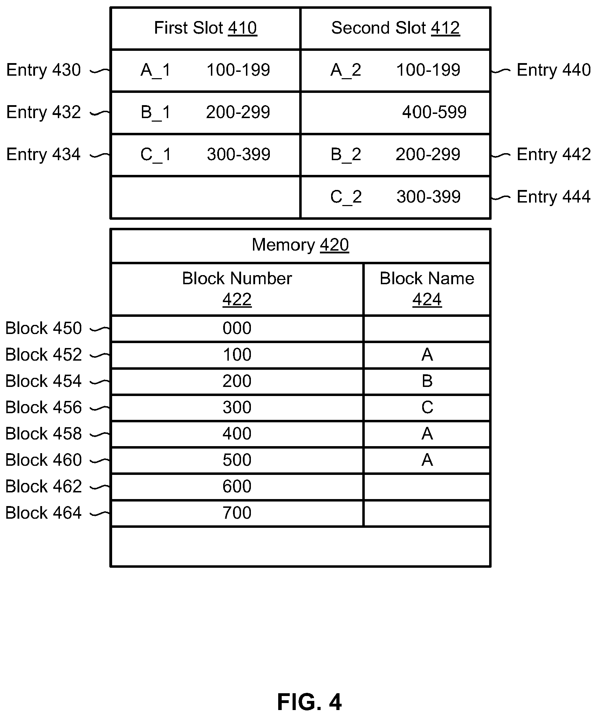

FIG. 4 illustrates modifying the second slot 412 for updating the software application 150 using a combination of redundant and non-redundant partitions, according to various embodiments. Partition management application 152 can receive an update of software application 150 from database(s) 142, from storage 114, over a network via network interface 106, and/or the like. During the software update, software application 150 continues to access the current version of software application 150 via the first slot 410. The first slot 410 has three partitions. Entry 430 indicates that partition A_1 includes an extent with an address range of 100-199, where partition management application 152 stores instructions and/or data for this extent in block 452 of memory 420. Entry 432 indicates that partition B_1 includes an extent with an address range of 200-299, where partition management application 152 stores instructions and/or data for this extent in block 454 of memory 420. Entry 434 indicates that partition C_1 includes an extent with an address range of 300-399, where partition management application 152 stores instructions and/or data for this extent in block 456 of memory 420.

Partition management application 152 generates a partition table in the second slot 412 for the software update of software application 150. If software application 150 is employing non-redundant (apparently redundant) partitions, then partition management application 152 allocates additional extents for partitions included in the software update of software application 150 that are being modified by the software update. Partition management application 152 does not allocate additional extents for partitions included in the software update of software application 150 that are not being modified by the software update.

As shown, the software update of software application 150 includes the same three partitions as the current version of software application 150. The software update of software application 150 includes an enlarged partition A that consumes two non-contiguous extents, whereas partition A of the current version consumes one contiguous extent. The software update of software application does not include any changes to partitions B and C. Partition management application 152 provides temporary redundancy for partition A so that the current version of software application 150 can be recovered and rebooted in the case that the software update fails and computing device 190 cannot boot the software update of software application 150. Therefore, partition management application 152 generates partitions for extents included in partition A of the software update of software application 150. Because partitions B and C are not being modified by the software update, partition management application 152 provides apparent redundancy, rather than actual redundancy, for partitions B and C.

In that regard, partition management application 152 generates a partition table and stores the partition table in the second slot 412, where the partition table includes three entries 440, 442, and 444 for three partitions included in the software update of software application 150. Entry 440 refers to the software update of partition A, denoted as A_2, entry 442 refers to the software update of partition B, denoted as B_2, and entry 444 refers to the software update of partition C, denoted as C_2. Entry 440 indicates that partition A_2 includes a first extent with an address range of 100-199 and a second extent with an address range of 400-599. Correspondingly, partition management application 152 stores instructions and/or data in block 452 of memory 420 with a block number 422 of 100, in block 458 of memory 420 with a block number 422 of 400, and in block 460 of memory 420 with a block number 422 of 400. Blocks 452, 458 and 460 have a block name 426 of A.

Entry 442 indicates that partition B_2 includes an extent with an address range of 200-299, which is the same address range as for partition B_1. Correspondingly, partition management application 152 stores instructions and/or data in block 454 of memory 420 with a block number 422 of 200 and with a block name 424 of B. Entry 444 indicates that partition C_2 includes a first extent with an address range of 300-399, which is the same address range as for partition C_1. Correspondingly, partition management application 152 stores instructions and/or data in block 456 of memory 420 with a block number 422 of 300 and with a block name 424 of C. Blocks 450, 462, and 464 are unused. With apparent redundancy, corresponding partitions in the first slot 410 and the second slot 412 can share the same blocks in memory 420, thereby reducing the storage requirements to store the current version and the software update of software application 150, relative to approaches that use full redundancy.

After the software update completes, computing device 190 determines whether the software update of software application 150 can successfully boot using data from the second slot 412. If the software update of software application 150 is unable to successfully boot from the second slot 412, then software application 150 continues to execute from the first slot 410. Further, partition management application 152 copies the first slot 410 to the second slot 412, thereby reverting to the configuration shown in FIG. 3. If, however, the software update of software application 150 is able to successfully boot using data from the second slot 412, then partition management application 152 copies the partition table from the second slot 412 into the first slot 410.

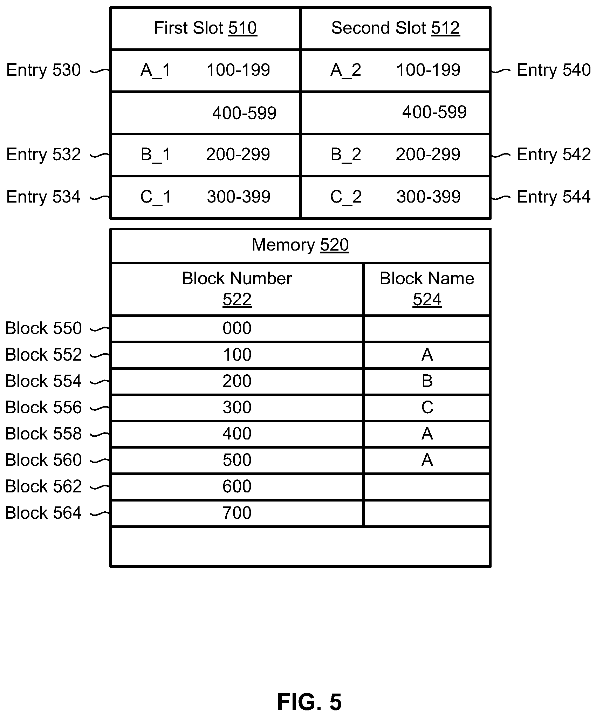

FIG. 5 illustrates copying the second slot 512 to the first slot 510 after completion of updating the software application 150, according to various embodiments. As described herein, if the software update of software application 150 is able to successfully boot using data from the second slot 512, then partition management application 152 copies the partition table from the second slot 512 into the first slot 510. After copying the partition table from the second slot 512 into the first slot 510, both the partitions of the first slot 510 and the partitions of the second slot 512 access the same blocks in memory 520.

In that regard, entry 530 in the first slot 510 indicates that partition A_1 includes a first extent with an address range of 100-199 and a second extent with an address range of 400-599. Entry 540 in the second slot 512 indicates that partition A_2 also includes a first extent with an address range of 100-199 and a second extent with an address range of 400-599. Correspondingly, partition management application 152 stores instructions and/or data for entries 530 and 540 in block 552 in memory 520 with a block number of 100, in block 558 in memory 520 with a block number 522 of 400, and in block 560 in memory with a block number 522 of 500. Blocks 552, 558 and 560 have a block name 524 of A.

Entry 532 in the first slot 510 indicates that partition B_1 includes an extent with an address range of 200-299. Entry 542 in the second slot 512 indicates that partition B_2 also includes an extent with an address range of 200-299. Correspondingly, partition management application 152 stores instructions and/or data for entries 532 and 542 in block 554 in memory 520 with a block number 522 of 200 and with a block name 524 of B. Entry 534 in the first slot 510 indicates that partition C_1 includes an extent with an address range of 300-399. Entry 544 in the second slot 512 indicates that partition C_2 also includes an extent with an address range of 300-399. Correspondingly, partition management application 152 stores instructions and/or data for entries 534 and 544 in block 556 of memory 520 with a block number 522 of 300 and with a block name 524 of C. Blocks 550, 562, and 564 are unused. After copying the partition table from the second slot 512 to the first slot 510, the configuration for the software update of software application 150, as shown in FIG. 5, is similar to the configuration for the current version of software application 150, as shown in FIG. 3.

To summarize, as shown in FIG. 3, prior to the software update process, software application 150 can access partitions A, B, and C for the current version of software application 150 via either the first slot 310 or the second slot 312. Although software application 150 can access the partitions via either of the two slots, the partitions include extents that reference the same blocks in memory 320. Therefore, partitions A, B, and C are apparently redundant to software application 150, but partitions A, B, and C are not replicated in memory 320. During the software update process, as shown in FIG. 4, software application 150 can access partition A for the current version of software application 150 via the first slot 410 and access partition A for the updated version of software application 150 via the second slot 412. Partition A for the current version of software application 150 includes extents that reference different blocks in memory 420 than the extents include in the updated version of software application 150. Partitions B and C in the first slot 410 and the second slot 412 continue to include extents that reference the same blocks in memory 420. After the software update process, as shown in FIG. 5, software application 150 can access shared partitions A, B, and C for the updated version of software application 150 via either the first slot 510 or the second slot 512. Although software application 150 can access the partitions via either of the two slots, the partitions include extents that reference the same blocks in memory 520. Therefore, partitions A, B, and C are apparently redundant to software application 150, but partitions A, B, and C are not replicated in memory 520.

It will be appreciated that the system shown herein is illustrative and that variations and modifications are possible. The system disclosed herein is illustrated and described as having blocks that span 100 memory addresses and are addressed by a block number comprising the start address of the block. However, the techniques can accommodate blocks of any size and using any block numbering and/or identifying techniques within the scope of the present disclosure. Further, the system disclosed herein is illustrated and described as having partition tables with certain numbers of partitions that include extents of certain sizes. However, the techniques can accommodate partition tables with any number of partitions, and the partitions can include extents of any size within the scope of the present disclosure. The partitions can be listed in the partition table in any order. In addition, the system disclosed herein is illustrated and described as having two slots, where each slot includes one partition table. However, the techniques can accommodate any number of slots and any number of partition tables within the scope of the present disclosure.

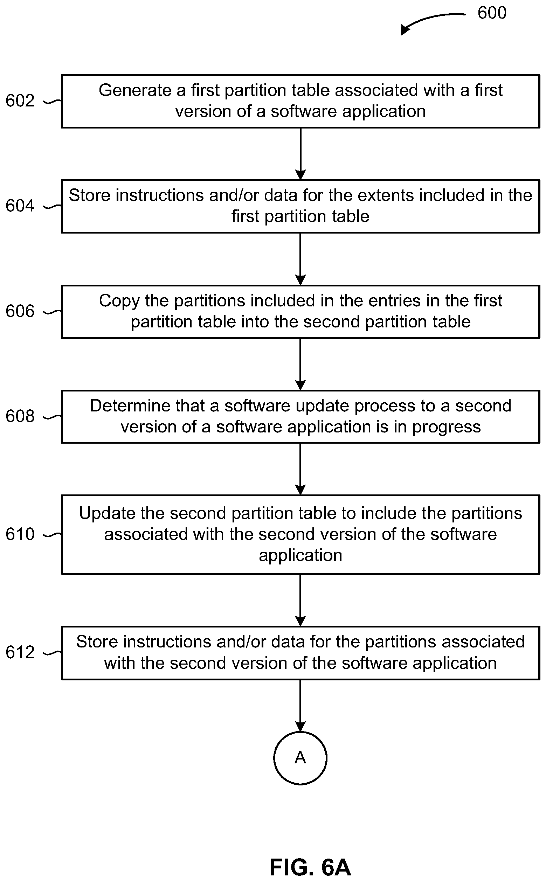

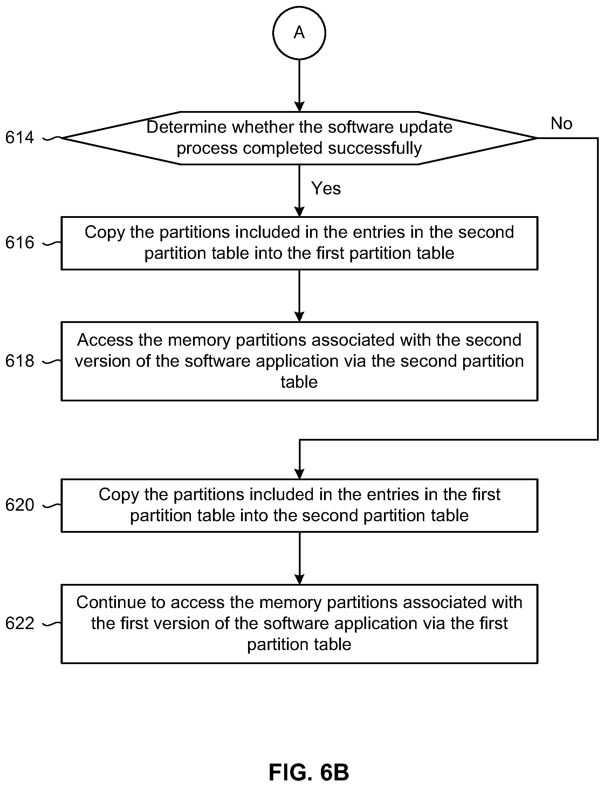

FIGs. 6A-6B set forth a flow diagram of method steps for managing memory partitions in the computing system 100 of FIG. 1, according to various embodiments. Although the method steps are described with respect to the systems and embodiments of FIGs. 1 through 5, persons skilled in the art will understand that any system configured to perform the method steps, in any order, falls within the scope of the various embodiments.

As shown, a method 600 begins at step 602, where a partition management application 152 executing on one or more processors generates a first partition table associated with a first version of a software application 150. Partition management application 152 stores the first partition table for a current version of software application 150 in a memory region referred to as a slot. Each entry of the first partition table refers to a memory partition, where a memory partition includes one or more extents. Each extent identifies a memory region of one or more blocks where partition management application 152 stores instructions and/or data associated with the first version of the software application 150. The extents included in a particular partition may be contiguous or not contiguous. Partition management application 152 updates the partition name for each partition in the first partition table with an identifier, such as "1," "a," and/or the like. The first version of the software application 150 accesses the extents via the first partition table. For example, FIG. 2 illustrates a first slot 210 after partition management application generates the first partition table in the first slot 210.

At step 604, partition management application 152 stores instructions and/or data for the extents included in the first partition table. Partition management application 152 can store instructions and/or data for the different partitions in the blocks of memory referenced by the extents included in the partitions of the first partition table. After storing the instructions and/or data for the extents, the current version of software application 150 can access the stored instructions and/or data via the partition table stored in the first slot.

At step 606, partition management application 152 copies the partitions included in the entries in the first partition table into a second partition table in a second slot. Partition management application 152 can update the partition name for each partition in the second partition table with an identifier, such as "2," "b," and/or the like. For example, FIG. 3 illustrates a first slot 310 and a second slot 312 after partition management application 152 copies the first partition table in the first slot 310 to the second slot 312 and updates the partition name for each partition in the second partition table. As a result, entry 330, 332, and 334 include partitions A_1, B_1, and C_1, where partitions A_1, B_1, and C_1 include extents that reference blocks 352, 354 and 356, respectively. Similarly, entries 340, 342 and 344 include partitions A_2, B_2, and C_2, where partitions A_2, B_2, and C_2 include extents that also reference blocks 352, 354 and 356, respectively.

At step 608, partition management application 152 determines that a software update process to a second version of the software application 150 is in progress. The one or more processors execute the software update process to upgrade the software application 150 from the first (current) version to a second (updated) version. Like the first version, the second version of the software application 150 includes a number of partitions, where each partition references one or more extents. The second version of the software application 150 can include extents that are shared with from corresponding extents in the first version. Additionally or alternatively, the second version of the software application 150 can include extents that are not shared with corresponding extents in the first version. Additionally or alternatively, the second version of the software application 150 can include new extents that are not in the first version and/or can be missing certain extents that are in the first version. Likewise, a partition can reference extents that are shared, not shared, new, or missing with respect to the extents of the first version, in any combination.

At step 610, partition management application 152 updates the second partition table to include the partitions associated with the second version of software application 150. Partition management application 152 updates the partition name for each updated partition and/or newly added partition in the second partition table with an updated version identifier, such as "2," "b," and/or the like. For example, FIG. 4 illustrates a first slot 410 and a second slot 412 after partition management application 152 updates the second partition table to include the partitions associated with the second version of software application 150. As a result, entry 440 includes partitions A_2 which, in turn, includes two extents. A first extent references block 452. A second extent references blocks 458 and 460. Entries 430, 432, 434, 442, and 444 remain unchanged from the corresponding entries in the partition tables of FIG. 3.

At step 612, partition management application 152 stores instructions and/or data for the partitions associated with the second version of software application 150. Partition management application 152 stores instructions and/or data for the updated partitions and/or new partitions in the blocks of memory referenced in the extents included in the partitions of the second partition table.

At step 614, partition management application 152 determines whether the software update process completed successfully. The software update process completed successfully if the extents associated with the second version of the software application 150 are stored in memory, the second partition table is stored in the second slot, and the one or more processors can successfully boot the second version of the software application 150 via the second slot.

If the update process completed successfully, then the method 600 proceeds to step 616, where partition management application 152 copies the partitions included in the entries in the second partition table into the first partition table. Partition management application 152 can update the partition name for each partition in the first partition table with the previous version identifier, such as "1," "a," and/or the like. For example, FIG. 5 illustrates a first slot 510 and a second slot 512 after partition management application 152 copies the second partition table in the second slot 512 to the first slot 510 and updates the partition name for each partition in the first partition table. As a result, entry 540 includes partition A_2, where partition A_2 includes two extents, a first extent that references block 552 and a second extent that references blocks 558 and 560. Entries 542 and 544 include partitions B_2 and C_2, where partitions B_2 and C_2 include extents that reference blocks 554 and 556, respectively. Similarly, entry 530 includes partition A_1, where partition A_1 also includes two extents, a first extent that references block 552 and a second extent that references blocks 558 and 560. Entries 532 and 534 include partitions B_1 and C_1, where partitions B_1 and C_1 include extents that also reference blocks 554 and 556, respectively.

At step 618, partition management application 152 accesses the second instances of the memory partitions associated with the second version of the software application 150 via the second partition table. When executing the second version of the software application 150, the software application 150 accesses the extents of the second version via the second partition table. Additionally or alternatively, the software application 150 can access the first instances of the memory partitions associated with the second version of the software application 150 via the first partition table. In some examples, prior to copying the entries in the second partition table into the entries in the first partition table, as in step 616, partition management application 152 can access the partitions associated with the second version of the software application 150 via the second partition table. After copying the entries in the second partition table into the entries in the first partition table, partition management application 152 can access the memory partitions associated with the second version of the software application via the first instances of the partitions included in the first partition table or via the second instances of the partitions included in the second partition table. The method 600 then terminates.

Returning to step 614, if the update process did not complete successfully, then the method 600 proceeds to step 620, where partition management application 152 copies the partitions included in the entries in the first partition table into a second partition table in the second slot, as described in conjunction with step 606. At step 622, partition management application 152 continues to access the first instances of the partitions associated with the first version of the software application via the first partition table. Additionally or alternatively, after copying the entries in the first partition table into the entries in the second partition table, partition management application 152 can access the second instances of the partitions via the second partition table. The method 600 then terminates.

In sum, an embedded electronics system emulates redundancy from non-critical partitions of a software application that use dynamic partitioning. The system emulates this redundancy by maintaining multiple partition tables that reference the memory extents allocated to software application. The software application accesses the partitions via these partition tables without being aware of which partitions actually have redundant copies and which partitions do not. Instead, the software application accesses all partitions through one of the partition tables, thereby simplifying overall system design.

During a software update, the system generates partitions for the updated software application in a non-active partition table. The system executes the current version of the software application via a first partition table (i.e., the currently active partition table) while the software update occurs via a second partition table (i.e., the software update partition table). Once the software update process completes successfully, and the system can boot from the updated software application, the system duplicates the metadata area in the second partition table into the first partition table. The end result is that both the first partition table and the second partition table have logical partitions sharing the same extents in memory. Therefore, each partition has only a single copy for corresponding extents in memory. The higher software application logic accesses the partition tables as if all partitions are redundant. However, because the partitions within each partition table share the same extents in memory, the total memory allocation is reduced.

As a result, the two partition tables have identical mapping allowing switching between partition tables. After a successful software update, the partition table from the second slot, which refers to the second version of the software application, is copied to first slot. Therefore, the second version of the software application can be accessed irrespective of which slot is active. After an unsuccessful software update, the partition table from the first slot, which refers to the first version of the software application, is copied to second slot. Therefore, the first version of the software application can be accessed irrespective of which slot is active.

At least one technical advantage of the disclosed approaches relative to the prior art is that, with the disclosed techniques, an embedded system can maintain a single set of relevant data areas shared between different versions of a software application in one or more partitions, thereby reducing the memory requirements relative to a system that maintains multiple sets of partitions. Further, the embedded system maintains multiple partition tables that map to the single set of partitions. As a result, the software application accesses the partitions via a particular partition table, without being aware of which partitions are duplicated and which partitions are not duplicated, thereby simplifying the software application design. These technical advantages provide one or more technological improvements over prior art approaches.

The descriptions of the various embodiments have been presented for purposes of illustration, but are not intended to be exhaustive or limited to the embodiments disclosed.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for managing memory partitions in a computing system comprising:
generating a first entry (330, 332, 334) for a first partition table (310) associated with a first instance of a software application (150), wherein the first entry is associated with a first memory partition (A_1, A_2) that includes a first memory extent (100-199);
determining that a first data block referenced by the first memory partition is shared with a second instance of the software application; and
generating a second entry for a second partition table (312) associated with a second instance of the software application, wherein the second entry is associated with the first memory partition that includes the first memory extent.

2. The computer-implemented method of claim 1, further comprising:
generating a third entry in the first partition table, wherein the third entry is associated with a second memory partition that includes a second memory extent;
determining that a second data block referenced by the second memory partition is not shared with the second instance of the software application; and
generating a fourth entry in the second partition table, wherein the fourth entry is associated with a third memory partition that includes a third memory extent that references the second data block.

3. The computer-implemented method of claim 2, wherein the third memory partition further references a fourth memory extent.

4. The computer-implemented method of claim 3, wherein the fourth memory extent is not contiguous with the third memory extent.

5. The computer-implemented method of claim 2, 3 or 4, further comprising:
determining that a software update to update a first version of the software application to a second version of the software application completed successfully;
copying the second entry in the second partition table into the first entry in the first partition table; and
copying the fourth entry in the second partition table into the third entry in the first partition table.

6. The computer-implemented method of claim 5, further comprising:
updating a partition name included in the first entry in the first partition table to identify the first instance of the software application; and
updating a partition name included in the third entry in the first partition table to identify the first instance of the software application.

7. The computer-implemented method of claim 5 or 6, further comprising:
accessing memory partitions associated with the second instance of the software application via the second partition table.

8. The computer-implemented method of claim 5, 6 or 7, further comprising, subsequent to copying the second entry in the second partition table into the first entry in the first partition table and copying the fourth entry in the second partition table into the third entry in the first partition table:
accessing memory partitions associated with the second version of the software application via the first partition table.

9. The computer-implemented method of any preceding claim, wherein memory partitions associated with a first version of the software application are accessed via the first partition table, and further comprising:
determining that a software update to update the first version of the software application to a second version of the software application did not complete successfully; and
continuing to access the memory partitions associated with the first version of the software application via the first partition table.

10. The computer-implemented method of any preceding claim, wherein, when executing a first version of the software application, the software application accesses the first memory extent via the first partition table.

11. One or more non-transitory computer-readable storage media including instructions that, when executed by one or more processors, cause the one or more processors to perform steps of the method of any preceding claim.

12. A system comprising:
a memory including instructions; and
one or more processors coupled to the memory and, when executing the instructions, to perform steps of the method of any of claims 1 to 10.

## Patentansprüche

1. Computerimplementiertes Verfahren zum Verwalten von Speicherpartitionen in einem Computersystem, umfassend:
Erzeugen eines ersten Eintrags (330, 332, 334) für eine erste Partitionstabelle (310), die einer ersten Instanz einer Softwareanwendung (150) zugeordnet ist, wobei der erste Eintrag einer ersten Speicherpartition (A_1, A_2) zugeordnet ist, die eine erste Speichererweiterung (100-199) umfasst;
Bestimmen, dass ein von der ersten Speicherpartition referenzierter erster Datenblock mit einer zweiten Instanz der Softwareanwendung geteilt wird; und
Erzeugen eines zweiten Eintrags für eine zweite Partitionstabelle (312), die einer zweiten Instanz der Softwareanwendung zugeordnet ist, wobei der zweite Eintrag der ersten Speicherpartition zugeordnet ist, die die erste Speichererweiterung umfasst.

2. Computerimplementiertes Verfahren nach Anspruch 1, ferner umfassend:
Erzeugen eines dritten Eintrags in der ersten Partitionstabelle, wobei der dritte Eintrag einer zweiten Speicherpartition zugeordnet ist, die eine zweite Speichererweiterung umfasst;
Bestimmen, dass ein von der zweiten Speicherpartition referenzierter zweiter Datenblock nicht mit der zweiten Instanz der Softwareanwendung geteilt wird; und
Erzeugen eines vierten Eintrags in der zweiten Partitionstabelle, wobei der vierte Eintrag einer dritten Speicherpartition zugeordnet ist, die eine dritte Speichererweiterung umfasst, die auf den zweiten Datenblock verweist.

3. Computerimplementiertes Verfahren nach Anspruch 2, wobei die dritte Speicherpartition ferner auf eine vierte Speichererweiterung verweist.

4. Computerimplementiertes Verfahren nach Anspruch 3, wobei die vierte Speichererweiterung nicht mit der dritten Speichererweiterung zusammenhängt.

5. Computerimplementiertes Verfahren nach Anspruch 2, 3 oder 4, ferner umfassend:
Bestimmen, dass ein Softwareupdate zum Aktualisieren einer ersten Version der Softwareanwendung auf eine zweite Version der Softwareanwendung erfolgreich abgeschlossen wurde;
Kopieren des zweiten Eintrags in der zweiten Partitionstabelle in den ersten Eintrag in der ersten Partitionstabelle; und
Kopieren des vierten Eintrags in der zweiten Partitionstabelle in den dritten Eintrag in der ersten Partitionstabelle.

6. Computerimplementiertes Verfahren nach Anspruch 5, ferner umfassend:
Aktualisieren eines Partitionsnamens, der in dem ersten Eintrag in der ersten Partitionstabelle enthalten ist, um die erste Instanz der Softwareanwendung zu identifizieren; und
Aktualisieren eines Partitionsnamens, der in dem dritten Eintrag in der ersten Partitionstabelle enthalten ist, um die erste Instanz der Softwareanwendung zu identifizieren.

7. Computerimplementiertes Verfahren nach Anspruch 5 oder **6,** ferner umfassend:
Zugreifen auf Speicherpartitionen, die der zweiten Instanz der Softwareanwendung über die zweite Partitionstabelle zugeordnet sind.

8. Computerimplementiertes Verfahren nach Anspruch 5, 6 oder 7, ferner umfassend, nach dem Kopieren des zweiten Eintrags in der zweiten Partitionstabelle in den ersten Eintrag in der ersten Partitionstabelle und dem Kopieren des vierten Eintrags in der zweiten Partitionstabelle in den dritten Eintrag in der ersten Partitionstabelle:
Zugreifen auf Speicherpartitionen, die der zweiten Version der Softwareanwendung über die erste Partitionstabelle zugeordnet sind.

9. Computerimplementiertes Verfahren nach einem der vorhergehenden Ansprüche, wobei auf Speicherpartitionen, die einer ersten Version der Softwareanwendung zugeordnet sind, über die erste Partitionstabelle zugegriffen wird, und ferner umfassend:
Bestimmen, dass ein Softwareupdate zum Aktualisieren einer ersten Version der Softwareanwendung auf eine zweite Version der Softwareanwendung nicht erfolgreich abgeschlossen wurde; und
Fortsetzen des Zugriffs auf Speicherpartitionen, die der ersten Version der Softwareanwendung über die erste Partitionstabelle zugeordnet sind.

10. Computerimplementiertes Verfahren nach einem der vorhergehenden Ansprüche, wobei, wenn eine erste Version der Softwareanwendung ausgeführt wird, die Softwareanwendung über die erste Partitionstabelle auf die erste Speichererweiterung zugreift.

11. Ein oder mehrere nichtflüchtige computerlesbare Speichermedien, die Anweisungen beinhalten, die bei Ausführung durch einen oder mehrere Prozessoren den einen oder die mehreren Prozessoren dazu veranlassen, das Verfahren nach einem der vorhergehenden Ansprüche auszuführen.

12. System, umfassend:
einen Speicher, der Anweisungen beinhaltet; und
einen oder mehrere Prozessoren, die mit dem Speicher gekoppelt sind und bei der Ausführung der Befehle Schritte des Verfahrens nach einem der Ansprüche 1 bis 10 ausführen.

## Revendications

1. Procédé mis en œuvre par ordinateur pour gestion de partitions de mémoire dans un système informatique comprenant :
la génération d'une première entrée (330, 332, 334) pour une première table de partition (310) associée à une première instance d'une application logicielle (150), dans lequel la première entrée est associée à une première partition de mémoire (A_1, A_2) qui comporte une première étendue de mémoire (100-199) ;
la détermination qu'un premier bloc de données référencé par la première partition de mémoire est partagé avec une seconde instance de l'application logicielle ; et
la génération d'une deuxième entrée pour une seconde table de partition (312) associée à une seconde instance de l'application logicielle, dans lequel la deuxième entrée est associée à la première partition de mémoire qui comporte la première étendue de mémoire.

2. Procédé mis en œuvre par ordinateur selon la revendication 1, comprenant également :
la génération d'une troisième entrée dans la première table de partition, dans lequel la troisième entrée est associée à une deuxième partition de mémoire qui comporte une deuxième étendue de mémoire ;
la détermination qu'un second bloc de données référencé par la deuxième partition de mémoire n'est pas partagé avec une seconde instance de l'application logicielle ; et
la génération d'une quatrième entrée dans la seconde table de partition, dans lequel la quatrième entrée est associée à une troisième partition de mémoire qui comporte une troisième étendue de mémoire qui fait référence au second bloc de données.

3. Procédé mis en œuvre par ordinateur selon la revendication 2, dans lequel la troisième partition de mémoire fait également référence à une quatrième étendue de mémoire.

4. Procédé mis en œuvre par ordinateur selon la revendication 3, dans lequel la quatrième étendue de mémoire n'est pas contiguë à la troisième étendue de mémoire.

5. Procédé mis en œuvre par ordinateur selon la revendication 2, 3 ou 4, comprenant également :
la détermination qu'une mise à jour logicielle pour mettre à jour une première version de l'application logicielle vers une seconde version de l'application logicielle s'est terminée avec succès ;
la copie de la deuxième entrée de la seconde table de partition dans la première entrée de la première table de partition ; et
la copie de la quatrième entrée de la seconde table de partition dans la troisième entrée de la première table de partition.

6. Procédé mis en œuvre par ordinateur selon la revendication 5, comprenant également :
la mise à jour d'un nom de partition compris dans la première entrée de la première table de partition pour identifier la première instance de l'application logicielle ; et
la mise à jour d'un nom de partition compris dans la troisième entrée de la première table de partition pour identifier la première instance de l'application logicielle.

7. Procédé mis en œuvre par ordinateur selon la revendication 5 ou 6, comprenant également :
le fait d'accéder aux partitions de mémoire associées à la seconde instance de l'application logicielle via la seconde table de partition.

8. Procédé mis en œuvre par ordinateur selon la revendication 5, 6 ou 7, comprenant également, après la copie de la deuxième entrée de la seconde table de partition dans la première entrée de la première table de partition et la copie de la quatrième entrée de la seconde table de partition dans la troisième entrée de la première table de partition :
l'accès aux partitions de mémoire associées à la seconde version de l'application logicielle via la première table de partition.

9. Procédé mis en œuvre par ordinateur selon une quelconque revendication précédente, dans lequel les partitions de mémoire associées à une première version de l'application logicielle sont accessibles via la première table de partitions, et comprenant également :
la détermination qu'une mise à jour logicielle pour mettre à jour la première version de l'application logicielle vers une seconde version de l'application logicielle ne s'est pas terminée avec succès ; et
le fait de continuer d'accéder aux partitions de mémoire associées à la première version de l'application logicielle via la première table de partition.

10. Procédé mis en œuvre par ordinateur selon une quelconque revendication précédente, dans lequel, lors de l'exécution d'une première version de l'application logicielle, l'application logicielle accède à la première étendue de mémoire via la première table de partition.

11. Un ou plusieurs supports de stockage non transitoires lisibles par ordinateur comportant des instructions qui, lorsqu'elles sont exécutées par un ou plusieurs processeurs, amènent les un ou plusieurs processeurs à réaliser les étapes du procédé selon une quelconque revendication précédente.

12. Système comprenant :
une mémoire comportant des instructions ; et
un ou plusieurs processeurs couplés à la mémoire et, lors de l'exécution des instructions, la réalisation des étapes du procédé selon l'une quelconque des revendications 1 à 10.
